(19) **Europäisches Patentamt**
**European Patent Office**
**Office européen des brevets**

(11) Numéro de publication: **0 141 003**
**A1**

(12) # DEMANDE DE BREVET EUROPEEN

(21) Numéro de dépôt: **83402134.7**

(22) Date de dépôt: **03.11.83**

(51) Int. Cl.⁴: **F 16 C 27/02**
**F 16 F 1/38**

(43) Date de publication de la demande:
**15.05.85 Bulletin 85/20**

(84) Etats contractants désignés:
**DE**

(71) Demandeur: **INCORE, S.A.R.L. dite:**
**5 rue de la Résistance Z.A. Croix Blanche Ouest**
**F-91700 Sainte Genevieve des Bois(FR)**

(72) Inventeur: **Bourgeois, Roger M.**
**49, avenue Jean Baptiste Clément**
**F-92140 Clamart(FR)**

(54) **Coussinet à rigidités variables assurant l'assemblage, le guidage et le filtrage des vibrations entre au moins deux ensembles mécaniques coaxiaux.**

㊿ Coussinet recouvert ponctuellement sur ses surfaces externe et interne d'une multitude de protubérances (1,6) juxtaposées de rigidités distinctes variables disposées et réparties de part et d'autre du corps due coussinet, reliées entre elles par des ponts (13,15) de matière pour constituer une liaison compacte déformable entre des ensembles mécaniques coaxiaux. Les protubérances 1 de la surface interne étant disposées à l'opposé de dégagements en creux (9) de la surface externe et réciproquement les protubérances (6) de la surface externe étant à l'opposé de dégagements en creux (2) de la surface interne.

Ces coussinets sont plus particulièrement destinés à être utilisés dans les industries mécaniques et electroniques pour les asservissements.

FIG.1

EP 0 141 003 A1

Coussinet à rigidités variables assurant l'assemblage, le guidage et le filtrage des vibrations entre au moins deux ensembles mécaniques coaxiaux.

L'invention concerne un coussinet pour l'assemblage, le guidage statique et dynamique et le filtrage des vibrations entre au moins deux ensembles mécaniques coaxiaux, dans le prolongement l'un de l'autre , avec ou sans mouvements relatifs entre deux rotations, de translations et de déversements.

Avec les dispositifs de coussinets monoblocs connus on ne peut réaliser une répartition judicieuse de combinaisons de plusieurs rigidités dissemblables de préférence localement orientées parallèlement et ou perpendiculairement à l'axe longitudinal pour compenser les déformations statiques et ou dynamiques fonctionnelles.

Il faut actuellement faire un choix pour un compromis et répartir le frottement sur la totalité de la portée de friction du coussinet tout en réduisant la précharge au minimum ce qui favorise l'apparition prématurée du jeu après un usage très court du coussinet. Dans d'autres cas de fabrication de coussinets composites connus, l'élément périphérique externe des dits coussinets est souvent constitué d'une enveloppe rigide périphérique pour éviter par feuilletage l'interférence des déformations élastiques nécessaires pour le maintien des coussinets par adhérence dans les cavités de leurs logements sur les éléments de friction adjacents. L'inconvénient de cette conception de coussinet est la superposition de ces trois composants à savoir, l'élément de filtrage, l'élément de fixation et le feuilletage nécessaires au désacouplage du filtrage et de la fixation le tout impliquant un encombrement plus important.

Partant de cet état de la technique dans les dispositifs de coussinets connus on ne peut réaliser, pour un même coussinet, la juxtaposition indépendemment les unes des autres de portées localisées de friction de rigidités dissemblables avec des portées de fixation de rigidités dissemblables. Les coussinets monoblocs utilisés actuellement ne sont que des compromis entre les déformations élastiques nécessaires à leur fixation de préférence par adhérence, les rigidités transversales perpendiculairement à l'axe longitudinal du coussinet nécessaires au guidage de deux ensembles mécaniques adjacents et le coefficient de friction relatif admissible entre les deux ensembles précités en mouvements relatifs. Ces compromis ne satisfont que partiellement aux cahiers des charges continuellement optimisés.

La présente invention a essentiellement pour but de créer un coussinet formant une unité de liaison monobloc à rigidités variables assurant l'assemblage, le guidage et le filtrage des vibrations entre au moins deux ensembles mécaniques coaxiaux dont l'un au moins présente une cavité qui coopère avec la surface externe dudit coussinet tandis qu'au moins un autre possède une portée de friction en saillie destinée à être engagée à l'intérieur dudit coussinet.

Le coussinet conforme à l'invention se caractérise principalement en ce que ses surfaces interne et externe sont ponctuées de protubérances séparées par des dégagements en creux de telle manière que les protubérances de la surface externe, qui constituent des portées élémentaires élastiques de fixation, sont réparties à l'opposé des dégagements en creux de la surface interne. Réciproquement, les protubérances de la surface interne, qui constituent des portées élémentaires de friction préchargeables, sont réparties à l'opposé des dégagements en creux de la surface externe. Le diamètre intérieur des protubérances de la surface externe est compris entre les diamètres intérieur et extérieur des protubérances de la surface interne et, réciproquement, le diamètre intérieur des protubérances de la surface interne est compris entre les diamètres intérieur et extérieur des protubérances de la surface externe.

Ainsi, conformément à l'invention, sur chacune des surfaces interne et externe du coussinet, les protubérances et les dégagements en creux forment, dans chaque section perpendiculaire à l'axe, un contour crénelé. Deux contours crénelés successifs sont décalés angulairement de telle manière qu'à chaque protubérance de l'un corresponde un dégagement en creux de l'autre.

Dans une variante d'exécution de l'invention, les dégagements en creux de la surface externe sont garnis partiellement par des butées dispo-

- 3 -

0141003

sées perpendiculairement à l'axe longitudinal, à l'opposé de chaque portée élémentaire de friction pour constituer, dans le sens radial, des limiteurs de débattement.

Dans une forme de réalisation préférée de l'invention, dans au moins un plan perpendiculaire à l'axe, les dégagements en creux de la surface externe sont totalement comblés pour constituer un contour circulaire dont le diamètre correspond au diamètre externe des protubérances de la surface externe, les protubérances correspondantes de la surface interne ayant alors un diamètre interne plus grand de manière à constituer, au droit du contour circulaire, une rainure.

Dans un coussinet conforme à l'invention, les formes des profils des projections dans les trois plans des protubérances qui forment les dites portées élémentaires de friction en relief sont déterminées de manière à obtenir les rigidités fonctionnellement recherchées, perpendiculairement à l'axe longitudinal, de préférence avec une légère précharge, sans jeu desdites portées élémentaires de friction en relief avec la portée de friction en saillie engagée à l'intérieur dudit coussinet. De même, les formes des profils des projections dans les trois plans des protubérances qui forment lesdites portées élé - mentaires élastiques de fixation sont déterminées de manière à obtenir les rigidités fonctionnellement recherchées, perpendiculairement à l'axe longitudinal, nécessaires au positionnement et au maintien dudit coussinet, de préférence par déformation élastique, avec adhérence dans la ou les cavités, symétriques ou dissymétriques, destinées à le recevoir et ménagées dans au moins un des ensembles mécaniques coaxiaux.

Selon une autre caractéristique de l'invention, les parties reliant partiellement entre elles les périphéries latérales des protubérances qui constituent les portées élémentaires de friction avec celles des protubérances qui constituent les portées élémentaires de fixation forment des ponts qui travaillent en cisaillement, les formes et les épaisseurs desdits ponts étant déterminées de façon à obtenir la surtension nécessaire au filtrage optimum des vibrations entre les ensembles mécaniques coaxiaux spécifiquement à chaque utilisation.

Lesdits ponts ont par ailleurs des longueurs différentes suivant leur orientation par rapport à l'axe longitudinal de façon à obtenir des rigidités longitudinales variables pour limiter, par saturation, les déplacements longitudinaux du corps dudit coussinet entre deux faces d'appui latérales de préférence perpendiculaires audit axe longitudinal.

L'un des avantages de l'éxécution monobloc de l'invention est qu'il n'est pas nécessaire d'associer plusieurs matériaux coûteux et une mise en oeuvre difficile pour réaliser les coussinets. Le même matériau peut à la fois convenir pour réaliser les portées élémentaires extérieures de fixation ainsi que les portées élémentaires intérieures de friction sans aucune interférence des unes par rapport aux autres du fait de leur juxtaposition. On peut en outre employer le même matériau pour relier entre elles ces différentes portées.

Il est en outre possible, sans dépense supplémentaire, de prévoir que les portées de friction et ou de fixation réparties sur un même contour interne et ou externe crénelé contenu dans chaque section faite perpendiculairement à l'axe longitudinal aient des variations de rigidités progressivement décroissantes d'un contour crénelé à un autre contour crénelé successif, ceci pour tous lesdits contours crénelés répartis longitudinalement du milieu du coussinet vers ses extrémités de manière à éviter les effets de bord sous charges et pour obtenir un faible coefficient de friction pour des déplacements relatifs des ensembles mécaniques coaxiaux, soit pour lui permettre un déversement angulaire longitudinalement sans précharges supplémentaires dues à l'auto-alignement, soit pour un centrage adéquat pour des déplacements relatifs des ensembles mécaniques adjacents et ou dans le prolongement l'un de l'autre.

Un tel coussinet possède un corps d'épaisseur variable constitué par un ou des matériaux rigides déformables pouvant être garni, au moins à l'une de ses extrémités, d'une étanchéité suivant les différents cas d'utilisation sa portée de friction peut être réalisée par exemple, soit par une pellicule d'épaisseur variable d'une résine synthétique, soit par revêtement acier graphité autolubrifiant à faible coefficient de frottement.

De même les portées élémentaires de fixation en relief élastiques s'adaptent aux formes symétriques et ou dissymétriques et absorbent les tolérances de fabrication des cavités des ensembles mécaniques adjacents sans interférence sur le coefficient de frottement.

D'autres caractéristiques et avantages de l'invention ressortiront plus clairement de la description qui va suivre de deux exemples de réalisation préférés, mais nullement limitatifs ainsi que des dessins schématiques annexés sur lesquels :

- La Figure 1 est une vue de face d'une des réalisations selon l'esprit de l'invention représentant tous les composants essentiels dudit coussinet;

- La Figure 2 est une vue longitudinale de la périphérie externe perpendiculairement à la vue de face de la Figure 1;

- La Figure 3 est une vue en coupe longitudinale représentant la périphérie interne dudit coussinet prise suivant la ligne A-A de la Figure 1; et

- La Figure 4 représente en perspective une autre forme de réalisation du coussinet selon l'esprit de l'invention.

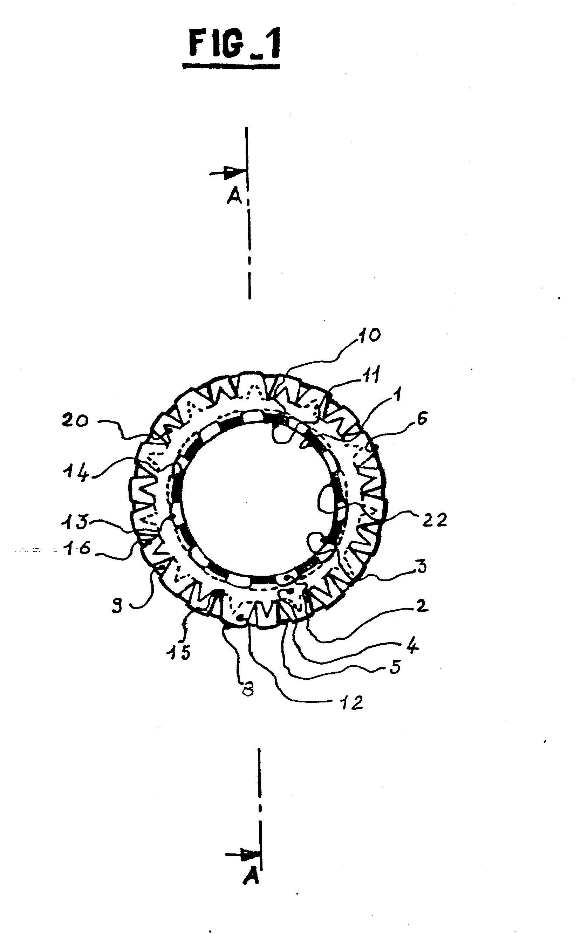

Dans le but de remédier aux inconvénients et apporter les améliorations précitées sans nécessiter un assemblage encombrant et ou une fabrication onéreuse des ensembles mécaniques coaxiaux la vue de face de la Figure 1 représente essentiellement les portées élémentaires de friction 1 préchargeables ponctuelles et ou de surfaces réduites 11. Les précharges desdites portées 1 sont de préférence de l'une à l'autre dissemblables distinctes variables désaccouplées perpendiculairement à l'axe longitudinal 7 dudit coussinet de même cesdites portées de friction 1 ponctuées séparées réparties alternativement par et entre des dégagements en creux 2 forment dans chaque plan contenant une de toutes les sections pouvant couper perpendiculairement l'axe longitudinal 7 un controu crénelé dû aux protubérances des portées de friction en relief sur la périphérie interne 3 du corps 4 du coussinet.

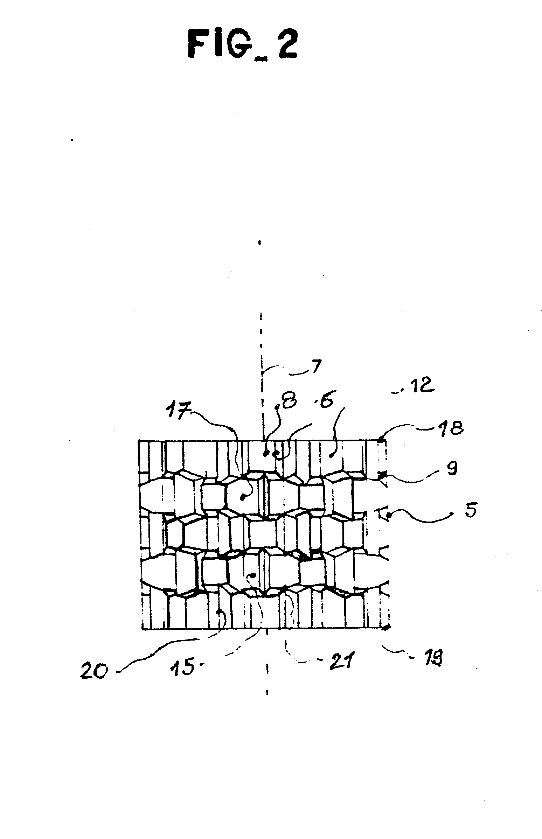

Sur les Figures 1 et 2, la périphérie externe 5 est ponctuée de portées élémentaires élastiques déformables de fixation 6 avec de préférence pour chaque portée 6 des rigidités dissemblables distinctes variables désaccouplées perpendiculairement à l'axe longitudinal 7 lesdites portées 6 sont réalisées par des surfaces en relief 8 séparées et ou réparties alternativement par et entre des dégagements en creux 9 de préférence, pour former dans chaque plan contenant une des sections pouvant couper perpendiculairement l'axe longitudinal 7 un contour crénelé dû aux protubérances des portées de fixation 6 en relief sur la périphérie externe 5 du corps 4 dudit coussinet. Les portées élémentaires de friction 1 en relief sont réparties à l'opposé des dégagements en creux 9 de la périphérie externe 5 dudit coussinet. Les formes des profils des projections des protubérances desdites portées en relief 1 dans les trois plans l'importance des volumes élémentaires 10 insérés entre cesdits profils à l'aplomb des dégagements en creux 9 jusqu'aux portées élémentaires de friction 1 de contacts ponctuelles et ou de surfaces réduites 11 sont réalisés proportionnellement de façon à obtenir les dites rigidités ponctuelles dissemblables distinctes variables désaccouplées nécessaires aux précharges optimum fonctionnellement recherchées pour lesdites portées de friction 1 perpendiculairement à l'axe longitudinal 7. Les portées élémentaires de fixation 6 en relief sont réparties à l'opposé des dégagements en creux 2 de la périphérie interne 3 dudit coussinet. Les formes des profils des projections des protubérances desdites portées en relief 6 dans les trois plans l'importance des volumes élémentaires 12 insérés entre cesdits profils à l'opposé des dégagements en creux 2 jusqu'aux portées élémentaires de fixation 6 de contact de surfaces réduites 8 sont réalisés proportionnellement de façon à obtenir perpendiculairement à l'axe longitudinal 7 lesdites rigidités ponctuelles dissemblables distinctes variables désaccouplées nécessaires au positionnement et au maintien statique et ou dynamique dudit coussinet de préférence par déformation élastique avec adhérence dans la ou les cavités symétriques et ou dissymétriques destinées à le recevoir.

Des ponts 13 relient partiellement entre elles les périphéries latérales 14 des volumes des protubérances réparties à l'aplomb des portées élémentaires de friction 1 en relief de même des ponts 15 relient partiellement entre elles les périphéries latérales 16 des volumes des protubérances réparties à l'aplomb des portées élémentaires de fixation 6 en relief. Les épaisseurs et les largeurs des sections desdits ponts entourant lesdits volumes 10 et 12 sont réalisés de façon à obtenir la surtension nécessaire au filtrage optimum des vibrations entre les ensembles mécaniques adjacents. Ces ponts 13 et 15 répartis sur l'ensemble du corps 4 dudit coussinet travaillent en cisaillement et ou en compression entre les portées de friction 1 et celle de fixation 6. La répartition et la longueur 17 de ces ponts sont localement différentes suivant leur position et ou leur orientation par rapport à l'axe longitudinal 7.

De même la Figure 2 montre que les portées de fixation 6 peuvent être réparties et disposées sur la périphérie externe 5 avec des rigidités perpendiculairement à l'axe longitudinal 7 différentes, par exemple plus faibles sur les portées élémentaires de fixation situées aux extrémités 18 et 19 dudit coussinet. Les dégagements en creux 9 de la périphérie externe 5 sont garnis de butées 20 limiteurs de débattement à l'opposé des portées de friction, de plus, les intervalles 21 de la périphérie externe 5 forment des passages naturels de communication à travers ledit coussinet.

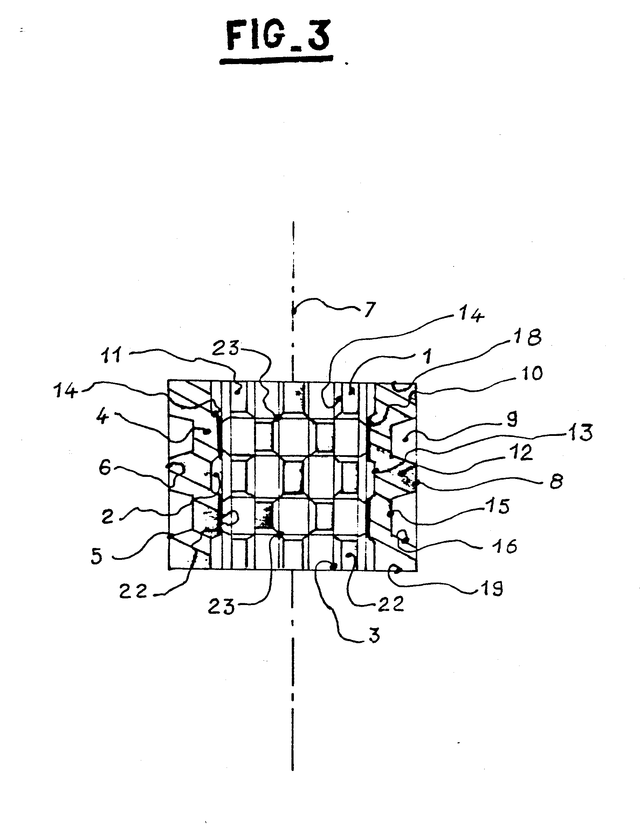

La Figure 3 montre que des portées de friction 1 réparties et disposées sur la périphérie interne 3 avec des rigidités variables perpendiculairement à l'axe longitudinal 7, par exemple plus faible sur les portées élémentaires de friction situées aux extrémités 18 et 19 dudit coussinet. Lesdites portées de friction 1 peuvent être revêtues d'un matériau de friction 22 de préférence de faible épaisseur et les intervalles 23 de la périphérie interne 3 peuvent former des passages naturels de communication à travers ledit coussinet conjointement avec ceux des intervalles 21.

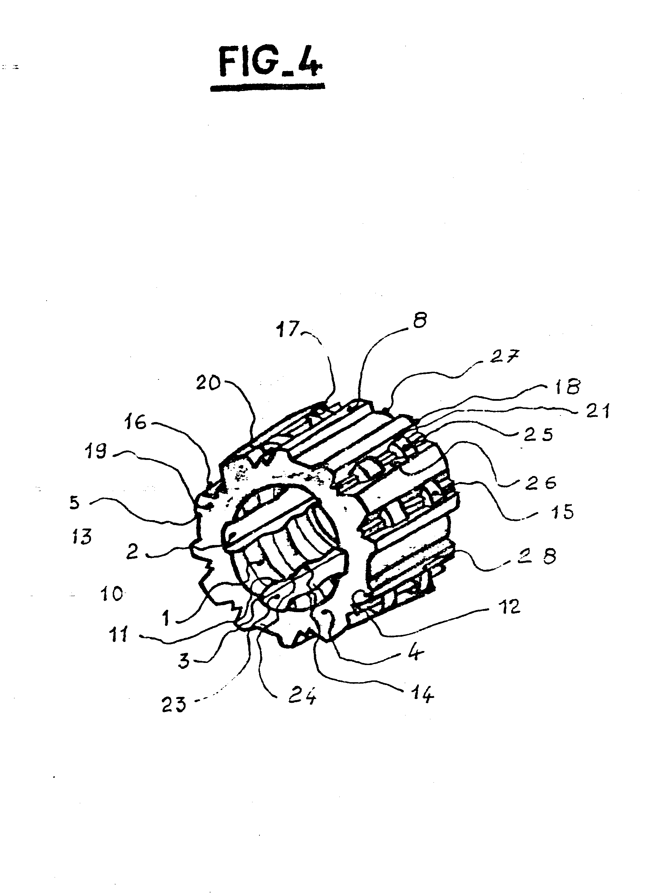

Selon un mode de réalisation du coussinet représenté en perspective à la Figure 4, les portées élémentaires de friction 1 sont des surfaces de demi-tore en relief qui s'étendent circonférentiellement en quatre secteurs séparés et limités sur la périphérie interne 3 du corps 4 dudit coussinet par quatre dégagements en creux 2 et par les passages de communication 23 dans cette réalisation on a dans la direction de l'axe longitudinal 7 trois contours crénelés successifs reliés partiellement entre eux par des ponts de liaison 24 au droit des passages de communication 23 et dans le plan perpendiculaire à l'axe longitudinal 7 les périphéries latérales 14 des volumes 10 limitent la longueur circonférentielle de chaque segment de surface d'un demi-tore en relief formant les portées élémentaires de friction 1 réparties dans chaque contour crénelé lesdites portées 1 sont reliées partiellement par des ponts de liaison 13. Sur la périphérie externe 5, on voit, en relief, les portées élémentaires élastiques déformables de fixation 6 réparties symétriquement de part et d'autre des portées élémentaires de friction 1 les butées limiteurs de débattement 20 disposées, de façon à éviter les effets de bord aux extrémités 18 et 19 du coussinet. Au droit des périphéries latérales 14 des portées de friction 1 des ponts de liaison 25 sont de formes identiques du fait de leur orientation et de leur disposition sur la périphérie externe 5, ils relient partiellement entre elles les périphéries latérales 16 des volumes répartis à l'aplomb des portées élémentaires de fixation 6 en relief. Des entretoises 26 s'intercalent entre les ponts de liaison 25 pour obtenir les rigidités axiales nécessaires au fonctionnement optimal dudit coussinet suivant l'axe longitudinal 7. Entre les faces des extrémités 18 et 19 dudit coussinet ces entretoises 26 obstruent partiellement les dégagements en creux 9 et réduisent le passage de communication suivant l'axe 7 de part en part dudit coussinet, pour compenser cette réduction des dégagements en creux supplémentaires 27 sont réalisés au niveau des surfaces en relief 8 des portées élémentaires élastiques déformables de fixation 6 pour éliminer l'affaiblissement dû aux évidements 27 des portées de fixation 6, elles sont reliées, par exemple axialement, entre elles pour former des portées d'un seul tenant 28.

Bien entendu l'invention n'est nullement limitée aux modes de réalisations décrits et représentés qui n'ont été donnés qu'à titre d'exemple. En particulier elle comprend tous les moyens constituant des équivalents techniques des moyens décrits ainsi que leurs combinaisons si celles-ci sont exécutées suivant son esprit et mises en oeuvre dans le cadre des revendications qui suivent.

**0141003**

Revendications

1 - Coussinet à rigidités variables assurant l'assemblage, le guidage et le filtrage des vibrations entre au moins deux ensembles mécaniques coaxiaux dont l'un au moins présente une cavité qui coopère avec la surface externe dudit coussinet tandis qu'au moins une autre possède une portée de friction en saillie destinée à être engagée à l'intérieur dudit coussinet caractérisé en ce que, les surfaces interne et externe dudit coussinet sont ponctuées de protubérances séparées par des dégagements en creux de telle manière que les protubérances de la surface externe, qui constituent des portées élémentaires élastiques de fixation (6) sont réparties à l'opposé des dégagements en creux (2) de la surface interne tandis que les protubérances de la surface interne qui constituent des portées élémentaires de friction préchargeables (1) sont réparties à l'opposé des dégagements en creux (9) de la surface externe, le diamètre intérieur des protubérances de la surface externe étant compris entre les diamètres intérieur et extérieur des protubérances de la surface interne et le diamètre extérieur des protubérances de la surface interne étant compris entre les diamètres intérieur et extérieur des protubérances de la surface externe. La rigidité peut être distante d'une partie élémentaire par rapport à une autre.

2 - Coussinet à rigidités variables selon la revendication 1, caractérisé en ce que, sur chacune des surfaces interne et externe du coussinet, les protubérances et les dégagements en creux sont disposés de manière à former, dans chaque section perpendiculaire à l'axe un contour crénelé.

3 - Coussinet à rigidités variables selon la revendication 2, caractérisé en ce que, deux contours crénelés successifs sont décalés angulairement de telle manière qu'à chaque protubérance de l'un corresponde un dégagement en creux de l'autre.

4 - Coussinet à rigidités variables selon l'une des revendications 1 à 3, caractérisé en ce que, les dégagements en creux (9) de la surface externe sont garnis partiellement par des butées ( 20 ) disposées perpendiculairement à l' axe longitudinal, à l'opposé de chaque portée élémentaire de friction (1) pour constituer, dans le sens radial, des limiteurs de débattement.

5 - Coussinet à rigidités variables selon l'une des revendications 1 à 4, caractérisé en ce que, dans au moins un plan perpendiculaire à l'axe, les dégagements en creux (9) de la surface externe sont totalement comblés pour constituer un contour circulaire dont le diamètre correspond au diamètre externe des protubérances de la surface externe (6), les protubérances correspondantes de la surface interne (1) ayant alors un diamètre interne plus grand de manière à constituer, au droit du contour circulaire, une rainure circulaire continue.

6 - Coussinet à rigidités variables selon l'une des revendications 1 à 5, caractérisé en ce que, les formes des profils des projections dans les trois plans des protubérances qui forment lesdites portées élémentaires de friction (1) en relief dont déterminées de manière à obtenir les rigidités fonctionnellement recherchées, perpendiculairement à l'axe longitudinal, de préférence avec une légère précharge, sans jeu desdites portées élémentaires de friction (1) en relief avec la portée de friction en saillie engagée à l'intérieur dudit coussinet.

7 - Coussinet à rigidités variables selon l'une des revendications 1 à 6, caractérisé en ce que, les formes des profils des projections dans les trois plans des protubérances qui forment lesdites portées élémentaires élastiques de fixation (6) sont déterminées de manière à obtenir les rigidités fonctionnellement recherchées, perpendiculairement à l'axe longitudinal, nécessaires au positionnement et au maintien dudit coussinet, de préférence par déformation élastique, avec adhérence dans la ou les cavités, symétriques ou dissymétriques, destinées à le recevoir et ménagées dans au moins un des ensembles mecaniques coaxiaux.

8 - Coussinet à rigidités variables selon l'une des revendications 1 à 7, caractérisé en ce que, les parties reliant partiellement entre elles les périphéries latérales des protubérances qui constituent les portées élémentaires de friction avec celles des protubérances qui constituent les portées élémentaires de fixation forment des ponts (13,15) qui travaillent en cisaillement, les formes et les épaisseurs desdits ponts étant déterminées de façon à obtenir la surtension nécessaire au filtrage optimum des vibrations entre les ensembles mécaniques coaxiaux spécifiquement à chaque utilisation.


9 - Coussinet à rigidités variables selon la revendication 8, caractérisé en ce que,les ponts (13,15) reliant partiellement entre elles les périphéries latérales des protubérances qui constituent les portées élémentaires de friction en relief avec celles des protubérances qui constituent les portées élémentaires de fixation en relief ont des longueurs différentes suivant leur orientation par rapport à l'axe longitudinal de façon à obtenir des rigidités longitudinales variables pour limiter, par saturation, les déplacements longitudinaux du corps dudit coussinet entre deux faces d'appui latérales de préférence perpendiculaires audit axe longitudinal.


10 - Coussinet à rigidités variables selon l'une des revendications 1 à 9, caractérisé en ce que, les portées élémentaires de friction (1) réparties sur un même contour interne crénelé contenu dans chaque section perpendiculairement audit axe longitudinal (7) ont des variations de rigidité progressivement décroissantes d'un contour crénelé à un autre contour crénelé successif ceci pour tous lesdits contours crénelés répartis longitudinalement du milieu dudit coussinet vers ses extrémités de manière à éviter les effets de bord sous charges pour obtenir un faible coefficient de friction sans jeu pour les déplacements relatifs des ensembles mécaniques coaxiaux.


11 - Coussinet à rigidités variables selon l'une des revendications 1 à 10, caractérisé en ce que, les portées élémentaires de fixation (6) réparties sur un même contour externe crénelé contenu dans chaque section perpendiculairement audit axe longitudinal (7) ont des variations de rigidités progressivement décroissantes d'un contour crénelé à un autre contour crénelé successif ceci pour tous les contours crénelés successifs répartis longitudinalement du milieu du coussinet vers ses extrémités de manière à ne pas brider les déversements angulaires longitudinaux par des précharges dynamiques supplémentaires dûes à l'auto-alignement pour un centrage adéquat des ensembles mécaniques coaxiaux.


12 - Coussinet à rigidités variables selon l'une des revendications 1 à 11, caractérisé en ce que, le coussinet constitue une unité de liaison monobloc dont la disposition des protubérances des portées élémentaires de friction (1) et des portées élémentaires de fixation (6) non alignées crée deux parties fonctionnelles distinctes sans interférence fonctionnelle entre elles.

13 - Coussinet à rigidités variables selon l'une des revendications 1 à 12, caractérisé en ce que, chaque extrémité latérale dudit coussinet est garnie d'au moins une étanchéité pour une utilisation en milieu pollué.

14 - Coussinet à rigidités variables selon l'une des revendications 1 à 13, caractérisé en ce que, les parties frottantes des portées de friction sont recouvertes d'une résine synthétique à faible coefficient de frottement.

15 - Coussinet à rigidités variables selon l'une des revendications 1 à 14, caractérisé en ce que, les parties frottantes des portées de friction (1) sont recouvertes d'un revêtement en acier graphité autolubrifiant à faible coefficient de frottement.

16 - Coussinet à rigidités variables selon l'une des revendications 1 à 15, caractérisé en ce que, les intervalles constitués par les dégaments forment naturellement au moins un passage axial (25) de part en part dudit coussinet pour assurer la libre circulation des fluides d'un des ensembles mécaniques vers les autres ensembles mécaniques coaxiaux.

17 - Coussinet à rigidités variables selon l'une des revendications 1 à 16, caractérisé en ce que, des intervalles constitués par des dégagements peuvent former naturellement au moins un passage radial sur la circonférence dudit coussinet pour assurer la libre circulation des fluides d'un des ensembles mécaniques vers les autres ensembles mécaniques plus couramment dénommés axes et logements.

18 - Coussinet à rigidités variables selon l'une des revendications 1 à 17, caractérisé en ce que, les portées élémentaires de fixation (6) en relief élastique s'adaptent aux formes de la cavité de l'un des ensembles mécaniques en absorbant les tolérances de fabrication sans interférence sur le coefficient de friction.

19 - Coussinet à rigidités variables selon l'une des revendications 1 à 18, caractérisé en ce que, ledit coussinet est réalisé en deux demi-coquilles séparées par un plan longitudinal de manière à faciliter le montage sur la portée de friction en saillie d'au moins un des ensembles mécaniques coaxiaux.

20 - Coussinet à rigidités variables selon l'une des revendications 1 à 19, caractérisé en ce que, ledit coussinet peut être fendu sur un plan longitudinal pour faciliter son montage sur la portée de friction d'au moins un des ensembles mécaniques coaxiaux.

PL:1/4

0141003

# FIG_1

# FIG_2

# FIG_3

# FIG_4

**0141003**

Numéro de la demande

**Office européen des brevets**

## RAPPORT DE RECHERCHE EUROPEENNE

EP 83 40 2134

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 186 091 (CAM GEARS LTD.)<br><br>* En entier * | 1,2,6-8,17-20 | F 16 C 27/02<br>F 16 F 1/38 |
| | --- | | |
| A | FR-A-1 450 121 (CONTINENTAL GUMMI WERKE AG)<br><br>* En entier * | 1-3,6-8,12,16-18 | |
| | --- | | |
| A | FR-A-1 153 821 (METALASTIK)<br><br>* En entier * | 1,2,6,7,12,13,18,20 | |
| | --- | | |
| A | US-A-2 352 049 (V.L. WEAVER)<br><br>* Colonne 3, ligne 46 - colonne 5, ligne 51; figures 2,2a,3 * | 1,2,8,9,12,16,18 | **DOMAINES TECHNIQUES RECHERCHES (Int. Cl. 3)** |
| | --- | | F 16 C<br>F 16 F |
| A | FR-A-2 466 663 (A. DE PRETTO et al.)<br>* Page 1, lignes 11-23; page 2, ligne 33 - page 3, ligne 4 * | 14,16-18 | |
| A | <br>* Page 3, lignes 13-20; figure 3 * | 1,2,6,7,12 | |
| | ---     -/- | | |

Le présent rapport de recherche a été établi pour toutes les revendications

| Lieu de la recherche | Date d'achèvement de la recherche | Examinateur |
|---|---|---|
| LA HAYE | 19-06-1984 | BEGUIN C.P. |

Office européen
des brevets

**RAPPORT DE RECHERCHE EUROPEENNE**

Numéro de la demande

0141003

EP 83 40 2134

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-1 310 614  (R. MOSSALGUE)  * En entier * | 1,2,12,16,18 | |
| A | CH-A-  497 296  (SA AUTOMOBILES CITROEN)  * Colonne 4, lignes 19-35; colonne 4, ligne 47 - colonne 5, ligne 16; figure 10 * | 1,7,11,13 | |
| A | * Colonne 5, lignes 29-37; figure 12 * | 17 | |
| A | US-A-3 110 526  (B. STERNLICHT) | | |
| E | FR-A-2 526 899  (INCORE SARL)  * En entier * | 1-20 | DOMAINES TECHNIQUES RECHERCHES (Int. Cl. ³) |

Le présent rapport de recherche a été établi pour toutes les revendications

| Lieu de la recherche LA HAYE | Date d'achèvement de la recherche 19-06-1984 | Examinateur BEGUIN C.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82